# EUROPEAN PATENT APPLICATION

(11) **EP 2 743 745 A1**
(43) Date of publication of application: **18.06.2014**
(21) Application number: 13196454.6
(22) Date of filing: 10.12.2013
(51) Int. Cl.: G02B 6/38

(54) **Field-installable optical splice**

(30) Priority: 11.12.2012 US 201213710888
(71) Applicant: Tyco Electronics Corporation, Berwyn, PA 19312 (US)
(72) Inventor: Gurreri, Michael Lawrence, York, PA Pennsylvania 17404 (US); Sauers, Frederick, Mechanicsburg, PA Pennsylvania 17050 (US); Rohde, Douglas Harold, Hershey, PA Pennsylvania 17033 (US); Fabian, David James, Mount Joy, PA Pennsylvania 17552 (US)
(74) Representative: Johnstone, Douglas Ian

(57) **Abstract**

An optical splice (200) for optically coupling two fibers, the splice (200) comprising: (a) a housing (201, 201a, 201b) having two ends and defining a reservoir (204); (b) a fiber clamp (202) for clamping two fibers together disposed in the housing (201); (c) two cable clamps (203), one on each end of the housing (201), the cable clamps (203) comprising a purchase point for anchoring strength members of the fibers, the purchase point being operatively connected to the housing (201); and (d) a sealant in the reservoir, the sealant adapted to engulf and adhere to a fiber extending from each cable clamp (203) to the fiber clamp (202).

## Description

The present invention relates generally to an optical splice, and, more specifically, to a field-installable optical splice adapted for extreme operating temperatures.

Field-installable optical splices are well known optical components for joining two segments of optical fiber together. Of particular interest herein are optical splices that are mechanically actuated to hold fibers together to optically couple them, as opposed to, for example, fused-type couplers which use heat/electric arc to fuse segments of fiber together. Mechanically-actuated splices are well suited for field installation situations in which heat or electrical arcs are prohibited, such as, for example, in airplanes once they are fueled and present a potentially-explosive environment.

An exemplary mechanically-actuated splice is disclosed in U.S. Patent No. 7,461,983 (incorporated herein by reference). This splice comprises a housing and a mechanically-actuated fiber clamping mechanism in the housing to clamp the fibers in position to maintain their alignment and effect their optical coupling. Traditional optical splices also comprise cable clamps on either side of the housing for clamping the strength members of the fiber to the housing to transfer any load applied on the cable to the housing rather than have the force act upon the fiber clamp and perhaps diminish the optical coupling therein. Such optical splices have proven to be reliable for a great many applications and are readily installed in the field through a convenient actuation mechanism in the fiber clamp.

The problem to be solved is a need, however, for an optical splice that can withstand extreme operating conditions, and, in particular, extreme temperature variations such as those encountered in aircraft and military applications. The present invention fulfills this need among others.

The present invention provides an optical splice configured for extreme conditions by encasing the fibers in the splice in a sealant to immobilize the fiber between the cable clamps and the fiber clamp. Specifically, Applicants have discovered that, in extreme temperature conditions, stress is induced on the fiber between the cable clamp and the fiber clamp. This stress impacts the optical coupling in the fiber clamp, resulting in diminished optical performance and even catastrophic failure of the optical coupling. The applicants have also discovered that if the fiber between the cable clamp and the fiber clamp is immobilized in a sealant, the incidence of the stress is relieved and the optical performance of the splice can be maintained over a wide temperature range.

The invention will now be described by way of example with reference to the accompanying drawings in which:

Fig. 1 shows a schematic of one embodiment of the optical splice of the present invention.

Fig. 2 shows an alternative embodiment of the optical splice of the present invention.

Fig. 3 shows yet another embodiment of the optical splice of the present invention.

Figs. 4a-4c shown different embodiment of a capillarity clamp for use in the splice of the present invention.

The present invention provides an optical splice configured for extreme conditions by encasing the fibers in the splice in a sealant to immobilize the fiber between the cable clamps and the fiber clamp. Specifically, the applicants have discovered that, in extreme temperature conditions, stress is induced on the fiber between the cable clamp and the fiber clamp. This stress impacts the optical coupling in the fiber clamp, resulting in diminished optical performance and even catastrophic failure of the optical coupling. The applicants have also discovered that if the fiber between the cable clamp and the fiber clamp is immobilized in a sealant, the incidence of the stress is relieved and the optical performance of the splice can be maintained over a wide temperature range.

Accordingly, one aspect of the invention is an optical splice in which the fiber between the cable clamps and the fiber camp is immobilized. In one embodiment, the optical splice comprises: (a) a housing having two ends and defining a reservoir; a fiber clamp for clamping two fibers together disposed in the housing; (b) two cable clamps, one on each end of the housing, the cable clamps comprising a purchase point for anchoring strength members of the fibers, the purchase point being operatively connected to the housing; and (c) a sealant in the reservoir, the sealant adapted to engulf and adhere to a fiber extending from each cable clamp to the fiber clamp.

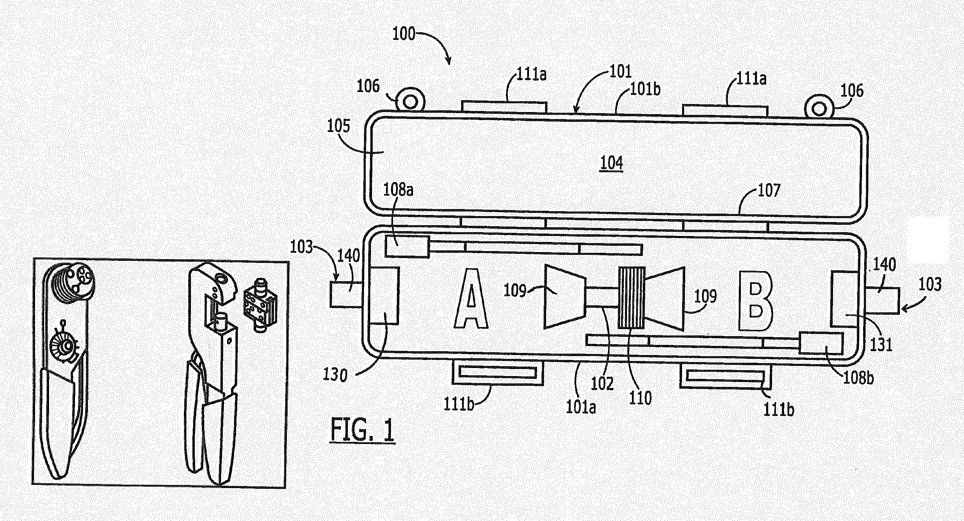

Referring to Fig. 1, one embodiment of the field-installable optical splice 100 is shown for optically coupling two fibers. The optical splice 100 comprises a housing 101 having two ends 130, 131 and defining a reservoir 104. Within the housing 101 is a fiber clamp 102 for clamping two fibers together. At each end 130, 131 of the housing 101 is disposed a cable clamp 103. The clamps 103 comprise a purchase point 140 for anchoring strength members of the fiber, wherein the purchase point is operatively connected to said housing 101. The splice 100 also comprises a sealant 105 in the said reservoir 104. The sealant is adapted to adhere to a fiber extending from each cable clamp to said fiber clamp, thereby immobilizing the fiber and maintaining the integrity of the optical coupling. These elements are discussed in greater detail below with respect to selected alternative embodiments.

The housing of the optical splice serves several functions-for example, it (1) protects the internal components - i.e., the fiber clamp and fiber--from external forces such as moisture and impact; (2) provides a substrate upon which is anchored the fiber clamp and the cable clamps; and (3) provides a reservoir to contain sealant for immobilizing the fiber between the cable clamp and the fiber clamp.

The housing may have a variety of different embodiments within the scope of this invention. For example, referring to Fig. 1, the housing 101 has a hinged configuration comprising a base 101a and a cover 101b. The base 101a provides a substrate for supporting the fiber clamp 102 and the cable clamps 103 and for holding them in a rigid, relative position to one another.

In this embodiment, the cable clamp 103 comprises a termination body, which functions as a purchase point 140 for the strength members. Specifically, the strength members of the fiber are arranged over the termination body and then are crimped to the termination body with a crimp (not shown). The termination body is typically knurled or otherwise textured for enhancing the grip on the strength members. These particular cable clamps 103 are disposed on the outside of the housing - i.e., they are not within the reservoir 104.

The reservoir 104 functions to contain the sealant, which immobilizes the fiber as described above. The reservoir can be defined in either the base 101a or the cover 101b. In the embodiment shown in Fig. 1, the reservoir 104 is defined in the cover 101b and is preloaded with sealant, such that when the fibers are terminated and the fiber clamp 102 and the cables are secured to the cable clamps 103, the cover 101b can be placed over the base 101a such that the sealant flows down and around the optical fiber and clamping mechanism to immobilize the fiber. Alternatively, the splice may be turned upside down and the based snapped closed on the cover, and then the splice turned right side up again so that the sealant flows around the fibers.

In this embodiment, the base 101a also comprises templates 108a and 108b for preparing the fiber ends to be inserted through the cable clamps 103 and into the fiber clamp 102. The templates are typically stepped to indicate at which point the jacket and strength members are separated from the fiber, at which point the fiber buffer is removed from the fiber, and at which point the fiber is stripped to bare fiber. In this particular embodiment, two templates 108a and 108b are provided for determining the proper fiber preparation on each side. Although a single template may be provided (or no template for the matter), dual templates enable the fibers to be prepared without the need to rotate or otherwise manipulate the splice, which can be particularly difficult if the splice is already terminated to a fiber. Additionally, having dual templates is beneficial if the fiber end preparation is not symmetrical for each fiber--that is, depending upon the clamping mechanism one fiber may be prepared differently - for example, the bare fiber portion may be longer in one fiber than the other fiber.

As mentioned above, the cover 101b in this embodiment functions to hold the sealant prior to its application in an encasement around the fibers. In this particular embodiment, the cover 101b is hinged to the base 101a through a living hinge 107, as shown. The advantage of using a living hinge as opposed to, for example, a discrete hinge, is that both the cover 101b and the base 101a may be integrally molded from a single, pliable, yet tough polymeric material. The cover 101b also comprises a latch 111a that cooperates with a corresponding latch 111b on the base to snap the cover shut on the base.

In one embodiment, the cover 101b is transparent to a particular actinic radiation suitable for curing the sealant (described below). For example, if the sealant is UV curable, then the cover 101a is transparent to UV light such that, once the cover 101b is snapped over the base 101a and the sealant flows around the fiber and the clamping mechanism as described above, UV light can be applied to the splice through the cover 101b to cure the sealant and thereby immobilize the fibers within.

In one embodiment, the housing 101 also comprises hanging eyelets 106 to facilitate the splice's installation.

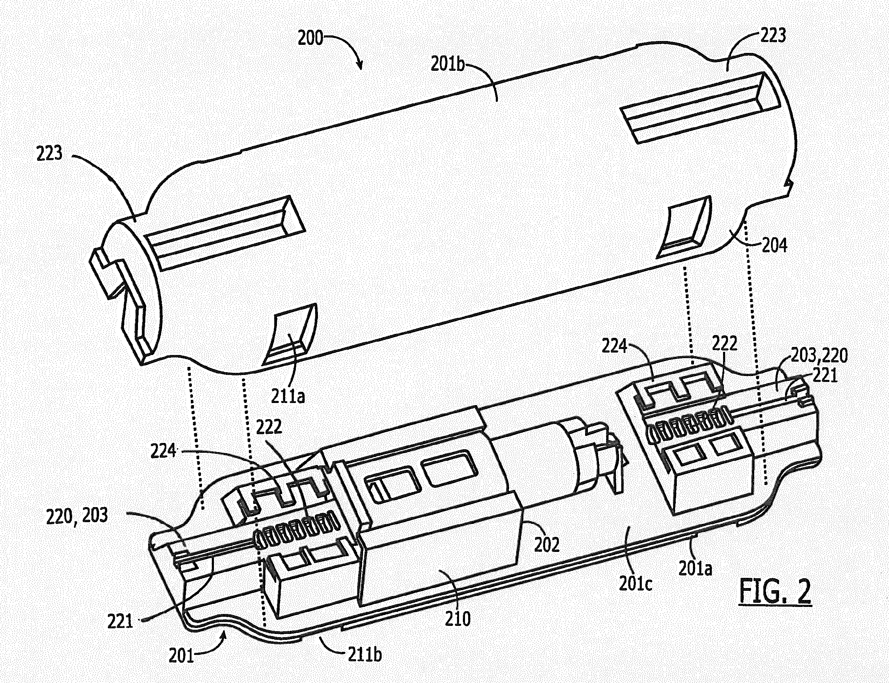

Referring to Fig. 2, another embodiment of the optical splice 200 of the present invention is shown. Optical splice 200 comprises a housing 201 comprising a base 201a and a cover 201b. Unlike the housing 101 in the embodiment of Fig. 1, the housing 201 in the embodiment of Fig. 2 is a two-piece configuration, in which the base 201a and the cover 201b are discrete components.

Like the base 101 a in the embodiment of Fig. 1, the base 201 a in the embodiment in Fig. 2 provides a substrate upon which is mounted the fiber clamp 202 and the cable clamps 203. Unlike the embodiment of Fig. 1, in this embodiment, the cable clamps 203 are internal to the housing 201, such that, when the cover 201b is disposed on the base 201a, the cable clamps are contained within the housing 201. Such an embodiment facilitates the encapsulation of the entire cable clamp in sealant to further stabilize the splice.

In this specific embodiment, the cable clamps 203 comprise platforms 220 which are raised from the substrate plane 201c of the base 201a and define a channel 221 through which the fiber is threaded during installation. The channel 221 has a series of ribs 222 to facilitate gripping of the fiber. The platform 220 cooperates with the protrusion 223 on the cover 201b such that, when the cover 201b is snapped onto the base 201a, the protrusion 223 urges the fiber into the channel 221 and ribs 222 and prevents it from moving.

In this embodiment, the cable clamps 203 also comprise tabs 224 for anchoring the strength members of the fiber cable. Specifically, the strength members (not shown) are "woven" or fed through the tabs 224 and then contained between the base 201a and the cover 201b.

The base 201a and the cover 201b interengage via latches 211a which snap into grooves 211b on the base. In this embodiment, the reservoir 204 is defined in the cover 201b. Therefore, during termination of the fibers, the cover 201b is held upside down to retain the sealer while the base 201b is snapped in place, and then the housing assembly is turned over to allow the sealant to flow around the fiber between the cable clamp and the fiber clamp. Again, as with the embodiment in Fig. 1, either the cover 201b or the base 201a may be transparent to radiation (e.g., UV light) to enable the sealant to be cured.

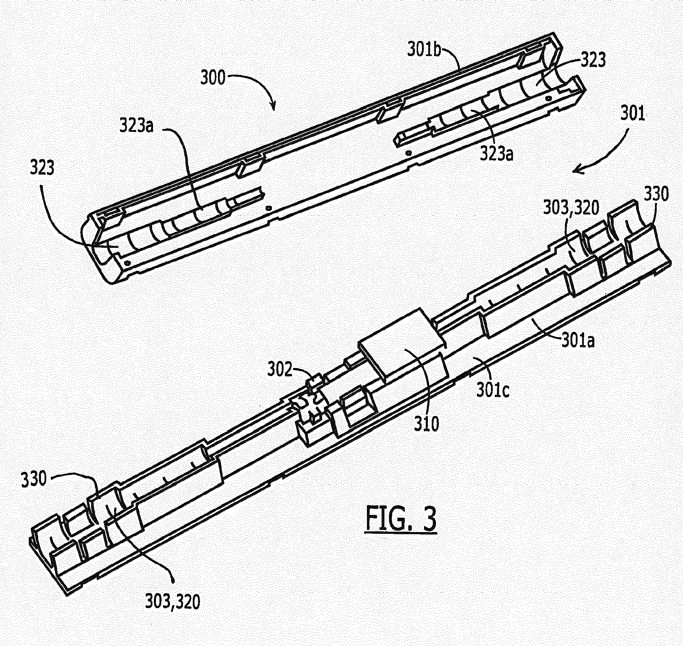

Referring to Fig. 3, another embodiment of the splice 300 is shown. In this embodiment, the housing 301, like the embodiment in Fig. 2, is a two-piece housing comprising a base 301a and a cover 301b. The housing 301 is similar to that of the embodiment of Fig. 2, although it is more elongated.

The base 301a provides a substrate for maintaining the relative positions of the fiber clamp 302 and the cable clamps 303. The base 301a defines the fiber clamp 303, which in this embodiment, is a channel 320 defined by one or more walls 330 projecting up from the substrate surface 301c of the base 301a. The channel 320 cooperates with a protrusion 323 on the cover 301b. Specifically, the protrusion 323, 323a increases from one end of the cover 301b toward the center, such that the fiber near the fiber clamp 302 is clamped down by the protrusion 323, 323a. In this embodiment, the strength members of the fiber cable are trimmed so there is a short length of exposed strength member. This shortened length of strength member along with the cable jacket is disposed in the channel 320 and is clamped between the protrusion 323, 323a and channel 320.

The fiber clamp used in the present invention may be any known device for clamping fibers to optically couple them. Suitable devices are disclosed, for example, in U.S. Patent No. 7,461,983, hereby incorporated by reference in its entirety. Still other embodiments can be used within the scope of the invention and will be apparent to those of skill and art in light of this disclosure.

In one embodiment, the clamping mechanism defines a platform having fiber-receiving channel extending from one end of the housing to the interior of the housing proximate the fiber clamp. In this embodiment, the fiber clamp also comprises a first cam member adjacent to the fiber-receiving channel, and a second cam member adjacent the first cam member. The first and second cam members have first and second cam surfaces, which cooperate such that, when one of either the first member or second member is moved axially, the first cam member moves toward the fiber-receiving channel. The clamping mechanism also comprises an actuator to move axially either the first or second cam members relative to each other. This is a known mechanism and is described in Patent No. 7,461,983.

To avoid the use of a crimping tool to actuate the clamping mechanism as is done, for example, in the clamping mechanism of Patent No. 7,461,983, a slideable actuator 110 may be used instead. In this embodiment, the slideable actuator 110 is operatively connected to the second cam member. When the sliding actuator is slid, it moves the first cam member relative to the second cam member, causing the second cam member to move toward the platform and clamp the fiber to the platform. Fig. 2 shows another embodiment of a sliding actuator 210. The sliding actuator 310 shown in Fig. 3 is essentially the same as that shown in Fig. 2.

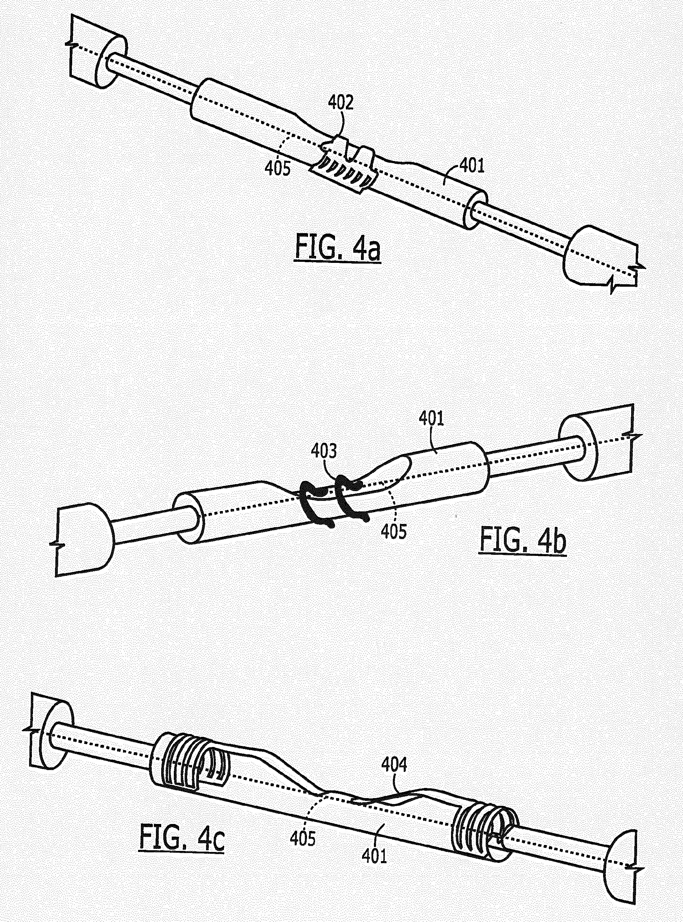

In another embodiment, rather than using a cam based clamping mechanism, an alignment sleeve is used. Quartz capillary tube has similar coefficient of thermal expansion (CTE) properties as the glass fiber and provides the opportunity to match the CTE of the adhesive. Quartz capillary tubes are readily available. For example, referring to Figs. 4a-4c, schematics of different embodiments of the quartz capillary alignment sleeve are shown. Depicted is the capillary 401 along with a few different options 402, 403 and 404, respectively, for a biasing mechanism (e.g., a spring) that will bias the fiber to the bottom of the inner capillary bore 405. The capillary and spring arrangement is incorporated into a housing with cable clamping features as described above. Index matched UV adhesive may be applied inside the capillary tube to bond the fiber, jacket and strength member to the tube. The cable clamps on the housing provide additional clamping force for higher tensile pull strength.

In one embodiment, the fiber clamp is transparent or translucent to allow for inspection of the optical coupling between the fiber segments. (As used herein, a translucent material also includes transparent materials.) More specifically, once the optical coupling is made and the fiber clamp is actuated to hold the fibers in place, light may be launched down one fiber and its coupling with the second fiber observed. If light is emitted at the optical coupling as viewed through the translucent fiber clamp, then a technician may conclude that the optical coupling is less than optimal. At this point, before the fibers are encased in sealant, the fiber clamp may be opened, and the fibers re-terminated. The process may be repeated until the optical coupling is determined to be sufficient. Once the integrity of the optical coupling is confirmed through observation, the fibers may be sealed.

In one embodiment, the fiber clamp comprises fiber lead-ins 109 to help guide the fiber end into the channel described above.

In one embodiment, a slight bend is imparted in the fiber between the cable clamp and the fiber clamp. Such a bend results in a slight axial force on the fiber that pushes the fiber into the fiber clamp. Having the fiber urge into the fiber clamp facilitates fiber clamping by urging the terminal ends of the fibers segments together to ensure physical contact. Such a bending configuration is disclosed in US Patent No. 6,951,425, incorporated herein by reference.

Although the fiber clamp clamps are described herein with respect to single fiber applications, it should be understood that the invention is not limited to single fiber clamps and may be used with currently-available multi-fiber clamps or later-developed fiber clamps.

The sealant used in the optical splice in the present invention may be any sealant suitable for immobilizing the fiber within the splice. The term sealant as used herein refers broadly to sealants, adhesives, coatings, bedding materials, and potting materials. In one embodiment, the sealant is initially free-flowing such that, after the fibers are terminated in the fiber clamp, the sealant is applied over the fibers and the fiber clamp. Once the free-flowing sealant encases the optical fiber and the other components of the splice, it is cured using known techniques. It is generally preferred, although not necessary, that the sealant be cured using actinic radiation, rather than using heat because heating may be prohibited in certain circumstances, such as in fueled aircraft as mentioned above. Actinic radiation includes, for example, light in the visible, ultraviolet or infrared regions of the spectrum, as well electron beam, ion or neutron beam or X-ray radiation. Actinic radiation may be in the form of incoherent light or coherent light such as light from a laser.

## Claims

1. An optical splice (100) for optically coupling two fibers, said splice (100) comprising:
a housing (101) having two ends (130, 131) and defining a reservoir (104);
a fiber clamp (102) for clamping two fibers together disposed in said housing (101);
two cable clamps (103), one on each end (130, 131) of said housing (101), said cable clamps (103) comprising a purchase point for anchoring strength members of said fibers, said purchase point being operatively connected to said housing (101); and
a sealant (105) in said reservoir (104), said sealant (105) adapted to engulf and adhere to a fiber extending from each cable clamp (103) to said fiber clamp (102).

2. The splice (100) of claim 1, wherein said housing (101) comprises a base (101a) and a cover (101b), said fiber clamp (102) and said cable clamps (103) being connected to said base (101a).

3. The splice (100) of claim 1 or 2, wherein said cover (101b) is pre-loaded with said sealant (105).

4. The splice (100) of any preceding claim, wherein said housing (101) comprises latches (111a) to latch said cover (101b) to said base (101a).

5. The splice (100) of any preceding claim, wherein said cover (101b) is hinged to said base (101a) with a living hinge (107) such that said cover (101b) and said base (101a) comprise a single, integrally-molded component.

6. The splice (100) of any preceding claim, wherein said housing (101) comprises at least one exterior eyelet (106) to facilitate hanging of said splice (100).

7. The splice (100) of any preceding claim, further comprising said fibers, said fibers bending between said cable clamp (103) and said fiber clamp (102) such that each fiber urges into said fiber clamp (102).

8. The splice (100) of any preceding claim, wherein said fiber clamp (102) comprises a platform and two camming members, wherein moving a first camming member axially causes a second camming member to urge against said platform, thereby clamping said fibers to said platform.

9. The splice (100) of claim 8, wherein a slidable actuator (110) is operatively connected to said first camming member.

10. The splice (100) of any preceding claim, wherein said fiber clamp (102) is at least translucent to facilitate inspection of the coupled fibers.

11. The splice (100) of any preceding claim, wherein said fiber clamp (102) comprises a sleeve for receiving each of said fibers.

12. The splice (100) of claim 11, wherein said sleeve comprises an orifice leading to a channel doling said fibers and a key adapted to be received in said orifice such that said key clamps said fibers against said sleeve to hold them in place.

13. The splice (100) of claim 12, wherein said sleeve is at least translucent.

14. The splice (100) of any preceding claim, wherein at least a portion of said housing (101) comprises a UV-transparent material.

15. The splice (200) of claim 1, wherein said cable clamp (203) comprises a platform (220) on said base (201a) and a corresponding protrusion (223) on said cover (201b) to clamp the strength members to said platform (220).

16. The splice (200) of any preceding claim, wherein said cable clamp (203) is inside said housing (201).

17. The splice (100) of any of claims 1 to 15, wherein said cable clamp (103) protrudes from said housing (101).

18. The splice (100) of any preceding claim, wherein said housing (101) comprises a base (101a) and a cover (101b) and wherein said cover (101b) and base (101a) snap together.

19. The splice (100) of any preceding claim, wherein said base (101a) defines templates (108a, 108b) for preparing terminal ends of each fiber.

20. The splice (100) of any preceding claim, wherein said fiber clamp (102) comprises a funnel (109) for guiding a fiber into said fiber clamp (102).
